# EUROPÄISCHE PATENTSCHRIFT

(11) **EP 2 322 362 B1**
(45) Veröffentlichungstag und Bekanntmachung des Hinweises auf die Patenterteilung: **09.07.2014**
(21) Anmeldenummer: 10190067.8
(22) Anmeldetag: 05.11.2010
(51) Int. Cl.: B60D 1/54

(54) **Kugelschwenkmodul**
Spherical swivel module
Module de basculement de sphère

(30) Priorität: 11.11.2009 DE 102009046631
(43) Veröffentlichungstag der Anmeldung: 18.05.2011
(73) Patentinhaber: ZF Friedrichshafen AG, 88038 Friedrichshafen (DE)
(72) Erfinder: Nordloh, Alfons, 49429 Visbek (DE); Bröker, Klaus, 49163 Bohmte (DE)

(56) Entgegenhaltungen:
- EP-A1- 1 894 752
- EP-A1- 1 946 947
- US-A1- 2008 053 811

## Beschreibung

### Beschreibung

Die Erfindung betrifft ein Kugelschwenkmodul mit einem Gehäuse, einem eine Gelenkkugel umfassenden Kugelzapfen, der mit seiner Gelenkkugel bewegbar in dem Gehäuse gelagert ist und sich aus diesem heraus erstreckt, und einem in dem Gehäuse gelagerten Führungselement, an dem der Kugelzapfen mit einer an der Gelenkkugel vorgesehenen Führungsfläche anliegt, sodass der Kugelzapfen zwischen zwei Endstellungen entlang einer vorgegebenen Bewegungsbahn relativ zu dem Gehäuse bewegbar ist.

Die gattungsfremde EP 1 275 533 B1 beschreibt eine Anhängerkupplung für Kraftfahrzeuge, mit einem Kupplungsarm, der an seinem freien Ende ein Kopfstück zum lösbaren Befestigen eines Anhängers trägt und zwischen einer im am Fahrzeug montierten Zustand nach hinten gerichteten Arbeitsstellung und einer weiter vorne unter dem Fahrzeug angeordneten Ruhestellung unter Ausführung einer Tauchbewegung verstellbar ist, und mit einer Feststellvorrichtung zum Feststellen des Kupplungsarms in Ruhestellung, wobei der Kupplungsarm in der Ruhestellung durch eine Kraft beaufschlagt ist, so dass er nach dem Lösen der Feststellvorrichtung selbsttätig aus der Ruhestellung zur Arbeitsstellung hin in eine untere Zwischenstellung schwenkt, so dass er von einem Benutzer bequem ergreifbar und in die Arbeitsstellung bringbar ist, und wobei als die den Kupplungsarm in Ruhestellung beaufschlagende Kraft dessen Gewichtskraft und/oder eine von einer Bereitstellungs-Federanordnung bereitgestellte Bereitstellungskraft vorgesehen ist. Der Kupplungsarm wird durch eine Haltevorrichtung in der Arbeitsstellung gehalten. Ferner ist eine Rückstellfederanordnung vorgesehen, die den Kupplungsarm nach Lösen der Haltevorrichtung aus der Arbeitsstellung in die Ruhestellung zurückstellt und die durch den Kupplungsarm auf dem Weg von der Ruhestellung in die Arbeitsstellung vorgespannt wird.

Im Gegensatz zu einem kompakten Kugelschwenkmodul baut diese Anhängerkupplung relativ groß. Ferner liegen viele bewegbare Bauteile dieser Anhängekupplung frei und sind somit anfällig für Verschmutzungen.

Eine gattungsgemäßes Kugelschwenkmodul wird in der EP 1 894 752 A1 beschrieben.

Ein eingangs genanntes Kugelschwenkmodul wird bevorzugt zum Schwenken einer Kugelstange einer schwenkbaren Anhängevorrichtung eingesetzt, wobei die Kugelstange mittels des Schwenkmoduls schwenkbar an einem Zugfahrzeug befestigt ist. Das Kugelschwenkmodul definiert zwei z.B. um 180° verdrehte Endstellungen, von denen eine eine Betriebsstellung und eine andere eine Ruhestellung für die Kugelstange bildet. In der Betriebsstellung ragt die Kugelstange nach hinten von dem Zugfahrzeug hervor, sodass ein Kupplungsgegenstück eines Anhängerfahrzeugs an die Kugelstange angekuppelt werden kann. In der Ruhestellung ist die Kugelstange unter das Fahrzeug geschwenkt und von außen vorzugsweise nicht sichtbar. In beiden Endstellungen ist das Kugelschwenkmodul verriegelbar, sodass eine unbeabsichtigte Schwenkbewegung der Kugelstange verhindert werden kann.

Aus den Endstellungen (Betriebs- und Ruhestellung) heraus ermöglicht das Kugelschwenkmodul im entriegelten Zustand ein leichtgängiges und selbstständiges Schwenken der Kugelstange, ggf. mit zusätzlichen Anbauteilen, wie eine Steckdose oder ein Kabel. Die Einleitung der Schwenkbewegung erfolgt auf Basis eines durch die Gewichtskraft der Kugelstange und der Anbauteile hervorgerufenen Drehmoments. Dem gewünschten leichtgängigen und freien Schwenken stehen in der Praxis aber mehrere Faktoren entgegen, die z.B. auf die innere Reibung des Kugelschwenkmoduls, auf das Reibmoment des Dichtungsbalgs und auf eine Schwerpunktlage der Kugelstange zurückzuführen sind. Die innere Reibung des Kugelschwenkmoduls und das Reibmoment des Dichtungsbalgs sind ferner stark temperaturabhängig. Zusätzlich kann das die Schwenkbewegung einleitende Drehmoment in den beiden Endstellungen unterschiedlich sein. Auch ist ein Überschwingen der Kugelstange möglich, was insbesondere bei einem von der Ruhestellung ausgehenden Schwenkvorgang zu einer Verletzung einer hinter dem Fahrzeug stehenden Bedienperson führen kann.

Der Erfindung liegt somit die Aufgabe zugrunde, ein Kugelschwenkmodul der eingangs genannten Art derart weiterzubilden, dass ausgehend von zumindest einer der Endstellungen das Einsetzen der Schwenkbewegung trotz Reibung und ggf. ungünstiger Schwerpunktlage sichergestellt werden kann.

Diese Aufgabe wird erfindungsgemäß mit einem Kugelschwenkmodul nach Anspruch 1 gelöst. Bevorzugte Weiterbildungen der Erfindung sind in den Unteransprüchen gegeben.

Das erfindungsgemäße Kugelschwenkmodul, insbesondere für eine Anhängevorrichtung für ein Zugfahrzeug, umfasst ein Gehäuse, einen eine Gelenkkugel umfassenden Kugelzapfen, der mit seiner Gelenkkugel bewegbar in dem Gehäuse gelagert ist und sich aus diesem heraus erstreckt, ein in dem Gehäuse gelagertes Führungselement, an dem der Kugelzapfen mit einer an der Gelenkkugel vorgesehenen Führungsfläche anliegt, sodass der Kugelzapfen zwischen zwei Endstellungen entlang einer vorgegebenen Bewegungsbahn relativ zu dem Gehäuse bewegbar ist, und eine in dem Gehäuse angeordnete und zwischen den Kugelzapfen und das Gehäuse geschaltete Drehfeder, gegen deren Federkraft der Kugelzapfen relativ zu dem Gehäuse in wenigstens eine der Endstellungen bewegbar, insbesondere drehbar, ist.

Durch die erfindungsgemäße Weiterbildung des eingangs genannten Kugelschwenkmoduls ist die Feder in der wenigstens einen Endstellung gespannt, sodass ein Herausschwenken des Kugelzapfens aus dieser Endstellung durch die Feder unterstützt wird. Somit sind die innere Reibung des Kugelschwenkmoduls, das Reibmoment eines Dichtungsbalgs und eine ggf. ungünstige Schwerpunktlage überwindbar. Ferner ist die Drehfeder in dem Gehäuse angeordnet, sodass sie gegen Verschmutzung geschützt werden kann und eine kompakte Anordnung geschaffen wird.

Bevorzugt ist der Kugelzapfen gegen die Kraft der Feder relativ zu dem Gehäuse in beide Endstellungen bewegbar, insbesondere drehbar. Hierdurch ist sichergestellt, dass die Feder in beiden Endstellungen gespannt ist, sodass ein Herausschwenken des Kugelzapfens aus jeder der Endstellungen durch die Feder unterstützt wird.

Die Drehfeder ist an dem Gehäuse und an dem Kugelzapfen insbesondere derart gelagert, dass der Kugelzapfen ausgehend von einer auf der Bewegungsbahn liegenden Zwischenstellung gegen die Kraft der Feder relativ zu dem Gehäuse in die wenigstens eine Endstellung bewegbar, vorzugsweise drehbar, ist. Insbesondere liegt die Zwischenstellung zwischen den beiden Endstellungen, sodass der Kugelzapfen ausgehend von der Zwischenstellung gegen die Kraft der Feder relativ zu dem Gehäuse in beide Endstellungen bewegbar, vorzugsweise drehbar, ist. Eine Drehung des Kugelzapfens relativ zu dem Gehäuse erfolgt bevorzugt um die Längsachse des Kugelzapfens. In der Zwischenstellung ist die Feder vorzugsweise nicht um ihre Drehachse gespannt (spannungsfreier Zustand der Drehfeder). In axialer Richtung steht die Feder aber bevorzugt unter Spannung, sodass sie sich nicht unbeabsichtigt lösen kann und/oder Klappergeräusche vermieden werden können.

Die Feder ist sowohl mit dem Kugelzapfen mittelbar oder unmittelbar als auch mit dem Gehäuse mittelbar oder unmittelbar verbunden. Beispielsweise kann sich die Feder an einer Ausnehmung oder Tasche eines Gehäusedeckels oder auch an einem Zapfen des Gehäuses abstützen. Gemäß einer Weiterbildung der Erfindung ist die Drehfeder mit dem Gehäuse unter Zwischenschaltung des Führungselements verbunden. Bevorzugt ist die Feder somit sowohl mit dem Kugelzapfen als auch mit dem Führungselement verbunden. Insbesondere ist die Feder zwischen den Kugelzapfen und das Führungselement geschaltet. Dies hat den Vorteil, dass die Drehfeder an dem ohnehin vorhandenen Führungselement abgestützt ist, sodass keine zusätzliche Abstützungsmöglichkeit für die Drehfeder am Gehäuse vorgesehen werden muss.

Gemäß einer ersten Alternative der Erfindung ist die Feder an dem Gehäuse und/oder an dem Kugelzapfen derart gelagert, dass in der Zwischenstellung bezüglich einer Verdrehung des Kugelzapfens relativ zu dem Gehäuse kein Spiel vorgesehen ist. Im Betrieb kann die Drehfeder dadurch aber stark belastet werden, sodass gemäß einer zweiten Alternative der Erfindung die Feder an dem Gehäuse und/oder an dem Kugelzapfen derart gelagert ist, dass in der Zwischenstellung bezüglich einer Verdrehung des Kugelzapfens relativ zu dem Gehäuse ein Spiel vorgesehen ist. Somit kann der Kugelzapfen ausgehend von der Zwischenstellung eine anfängliche Drehbewegung relativ zu dem Gehäuse ohne Gegenkraft der Feder ausführen (Leerbewegung).

Bevorzugt ist die Feder mit einem ihrer Enden mit dem Kugelzapfen und mit einem anderen ihrer Enden mit dem Führungselement oder mit dem Gehäuse verbunden. Ferner kann die Feder mit ihrem anderen Ende mit einer am Gehäuse vorgesehen Führungsbahn in Eingriff stehen. Insbesondere greift die Feder mit ihrem einen Ende in den Kugelzapfen ein und weist an ihrem anderen Ende wenigstens eine Aufnahme auf, in welche der Führungsstift oder ein am Gehäuse vorgesehener Zapfen eingreift. Die Feder ist bevorzugt als gewickelte Feder ausgebildet. Insbesondere ist die Feder aus gewickeltem Draht gebildet, der zur Ausbildung der Aufnahme vorzugsweise U-förmig gebogen ist. Es sind aber auch andere Formen als die U-Form zur Ausbildung der Aufnahme möglich, wie z.B. eine V-Form. An ihrem der Aufnahme abgewandten Ende weist die Feder bevorzugt einen durch den Draht gebildeten Stift auf, der in den Kugelzapfen eingreift, insbesondere in ein in dem Kugelzapfen vorgesehenes Loch. Der Stift verläuft vorzugsweise in Längsrichtung der Feder. Bevorzugt ist die Feder im radialen Abstand zu Ihrer Drehachse, die insbesondere durch die Längsmittenachse der Feder gebildet ist, mit dem Kugelzapfen verbunden. Hierdurch ist es möglich, dass der in das Loch eingreifende Stift ohne zusätzliche Befestigungsmaßnahmen bei einer Drehung des Kugelzapfens relativ zu dem Gehäuse von dem Kugelzapfen mitgenommen wird. Die Aufnahme bildet mit dem Führungselement oder Zapfen bevorzugt eine drehfeste Verbindung bezüglich einer Verdrehung der Feder um ihre Drehachse. Statt der Aufnahme kann dieses Ende der Feder auch stiftartig sein, um mit dem Gehäuse eine drehfeste Verbindung bezüglich einer Verdrehung der Feder um ihre Drehachse zu gewährleisten, in dem das stiftartige Ende sich am Gehäuse in einem Loch oder einer Tasche oder Gehäusedeckel abzustützen. Ist in der Zwischenstellung kein Spiel vorhanden, so schmiegt sich die Aufnahme vorzugsweise an das Führungselement oder den Zapfen an. Ist in der Zwischenstellung hingegen ein Spiel vorgesehen, so ist die Aufnahme vorzugsweise gegenüber dem Führungselement oder Zapfen aufgeweitet.

Aufgrund der räumlichen Enge in dem Kugelschwenkmodul besteht der Bedarf, möglichst wenig zusätzlichen Bauraum für die Feder vorzusehen. Der Kugelzapfen weist bevorzugt eine zur Führungsfläche hin offene Ausnehmung auf, in welcher die Feder sitzt. Insbesondere sitzt die Feder mit ihrer Wicklung in der Ausnehmung. Hierdurch ist eine besonders raumsparende Anordnung der Feder möglich. Das Loch zur Aufnahme des Stifts ist bevorzugt in einem Boden oder in einer Innenschulter der Ausnehmung vorgesehen.

Gemäß einer Ausgestaltung der Erfindung ist der Kugelzapfen durch eine Drehung um 180° relativ zu dem Gehäuse von einer ersten der Endstellungen in eine zweite der Endstellungen überführbar. Es sind aber auch andere Drehwinkel als 180° möglich, wie z.B. 190°, um den Kugelzapfen relativ zu dem Gehäuse von der ersten Endstellung in die zweite Endstellung zu überführen.

Das Führungselement steht mit der Führungsfläche insbesondere in Linienberührung. Vorzugsweise zwingt das Zusammenwirken von Führungselement und Führungsfläche den Kugelzapfen bei einer Drehbewegung zu einer der Drehbewegung überlagerten Kipp- oder Schwenkbewegung. Die Führungsfläche ist somit insbesondere derart ausgestaltet, dass der Kugelzapfen bei einer Drehbewegung gleichzeitig eine Schwenkbewegung ausführt.

Die Führungsfläche begrenzt im Zusammenwirken mit dem Führungselement die Beweglichkeit des Kugelzapfens relativ zu dem Gehäuse. Zusätzlich kann die Beweglichkeit des Kugelzapfens relativ zu dem Gehäuse durch eine in dem Gehäuse vorgesehene Öffnung begrenzt sein, durch welche sich der Kugelzapfen hindurch und aus dem Gehäuse heraus erstreckt. Gemäß einer Ausgestaltung der Erfindung bildet die Gehäuseöffnung ein Langloch, in welchem der Kugelzapfen geführt ist. Die Führungsfläche verläuft insbesondere schräg zur Längsachse des Kugelzapfens. Bevorzugt ist die Führungsfläche eben, uneben oder bereichsweise gekrümmt ausgebildet. Die zulässige Bewegungsbahn des Kugelzapfens ist vorzugsweise linienförmig.

Das Führungselement kann einstückig mit dem Gehäuse ausgebildet sein. Vorzugsweise bildet das Führungselement aber ein separates Bauteil oder eine separate Baugruppe und ist an dem Gehäuse gelagert. Das Führungselement umfasst bevorzugt einen Bolzen oder ist als Bolzen ausgebildet. Insbesondere umfasst das Führungselement eine oder mehrere, vorzugsweise zwei, Lagerhülsen, in die der Bolzen eingreift oder die der Bolzen durchgreift. Das Führungselement ist bezüglich einer Drehung des Kugelzapfens relativ zu dem Gehäuse bevorzugt drehfest mit dem Gehäuse verbunden. Vorzugsweise ist das Führungselement relativ zu dem Gehäuse ortsfest. Die Führungsfläche liegt bevorzugt an der oder den Lagerhülsen an.

Gemäß einer Weiterbildung der Erfindung ist ausgehend von einem Zustand der Feder, in dem diese nicht um ihre Drehachse gespannt ist, der Kugelzapfen durch eine Drehung um einen ersten Winkel relativ zu dem Gehäuse mit einem ersten Drehsinn gegen die Kraft der Feder in die erste Endstellung und durch eine Drehung um einen zweiten Winkel relativ zu dem Gehäuse mit einem dem ersten Drehsinn entgegengesetzten zweiten Drehsinn gegen die Kraft der Feder in die zweite Endstellung bewegbar. Der erste Winkel und der zweite Winkel können gleich oder unterschiedlich sein. Insbesondere betragen die beiden Winkel jeweils 90°. Ausgehend von jeder der Endstellungen ist der Kugelzapfen somit durch eine Drehung um den jeweiligen Winkel von z.B. 90° in eine oder die Zwischenstellung (z.B. senkrechte oder 90°-Stellung) überführbar, in der die Feder nicht um ihre Drehachse gespannt ist.

Gemäß einer Weiterbildung der Erfindung ist der Kugelzapfen in den Endstellungen an dem Gehäuse mittels einer oder mehrerer Verriegelungsvorrichtungen verriegelbar. Somit ist es möglich, den Kugelzapfen in beiden Endstellungen zu fixieren. Die Verriegelungsvorrichtung oder die Verriegelungsvorrichtungen sind insbesondere lösbar, sodass ein Herausschwenken des Kugelzapfens aus den Endstellungen möglich ist. Die Verriegelungsvorrichtungen können für beide Endstellungen gleich, unterschiedlich oder teilweise unterschiedlich sein.

Die Gelenkkugel ist insbesondere gleitbeweglich in dem Gehäuse gelagert. Vorzugsweise ist die Gelenkkugel drehbar und/oder schwenkbar in dem Gehäuse gelagert. Gemäß einer Ausgestaltung der Erfindung sitzt die Gelenkkugel in einer in dem Gehäuse angeordneten Kugelschale, die insbesondere aus Kunststoff besteht.

Der Kugelzapfen umfasst bevorzugt einen starr mit der Gelenkkugel verbundenen Zapfen, mit welchem der Kugelzapfen aus dem Gehäuse herausragt. Der Zapfen kann einstückig mit der Gelenkkugel ausgebildet sein. Alternativ können die Gelenkkugel und der Zapfen separat gefertigt und anschließend starr miteinander verbunden sein. Die Führungsfläche ist bevorzugt an einem dem Zapfen abgewandten Endbereich der Gelenkkugel vorgesehen.

Der Kugelzapfen und das Gehäuse bilden jeweils ein Gelenkteil, wobei mit einem der Gelenkteile bevorzugt eine Kugelstange fest verbunden ist. Das andere der Gelenkteile ist bevorzugt an einem Zugfahrzeug befestigt, welches insbesondere ein Kraftfahrzeug ist. Die Kugelstange ist somit mittels des Kugelschwenkmoduls schwenkbar an dem Zugfahrzeug gelagert. An ihrem freien Ende weist die Kugelstange bevorzugt eine Kupplungskugel auf, an die ein Kupplungsgegenstück eines Anhängerfahrzeugs ankuppelbar ist. Das Kupplungsgegenstück umfasst bevorzugt eine Kugelpfanne, in welcher die Kupplungskugel im angekuppelten Zustand gelagert ist. Gemäß einer ersten Alternative der Erfindung ist die Kugelstange fest mit dem Gehäuse und der Kugelzapfen fest mit Zugfahrzeug verbunden. Die Kugelstange und das Gehäuse können einstückig ausgebildet sein. Gemäß einer zweiten Alternative der Erfindung ist die Kugelstange fest mit dem Kugelzapfen und das Gehäuse fest mit Zugfahrzeug verbunden. Die Kugelstange und der Kugelzapfen können einstückig ausgebildet sein. Beispielsweise kann die Kugelstange den Zapfen bilden.

Erfindungsgemäß ist somit eine Drehfeder in das Kugelschwenkmodul eingebaut. Die Drehfeder ist vorzugsweise in einer Zwischenstellung (z.B. 90°-Stellung) lastfrei zwischen dem Kugelzapfen und dem Gehäuse angeordnet. Von Hand kann der Kugelzapfen relativ zu dem Gehäuse in eine Endstellung überführt werden, wobei die Feder vorgespannt wird. In der Endstellung ist ausreichend Energie in der Feder gespeichert, sodass nach dem Entriegeln der Kugelzapfen wieder in seine Zwischenstellung überführbar ist. Auch kann durch die Feder ein zu starkes Überschwingen des Kugelzapfens wirksam vermieden und somit die Verletzungsgefahr herabgesetzt werden. Die Feder ist insbesondere derart gestaltet, dass kein zusätzlicher Bauraum erforderlich ist. Vorzugsweise ist die Feder in einem Innenbereich (Ausnehmung) im Kugelzapfen angeordnet. Die Feder ermöglicht insbesondere eine Drehbewegung des Kugelzapfens relativ zu dem Gehäuse, wobei eine Kippbewegung (Schwenkbewegung) des Kugelzapfens nicht beeinträchtigt wird. Die Feder kann für unterschiedliche Anbauteile ausgelegt werden, sodass es möglich ist, für unterschiedliche Anwendungen stets ein optimales Schwenkverhalten einzustellen.

Durch die Feder kann das Schwenkverhalten des Kugelschwenkmoduls optimiert bzw. erst ermöglicht werden. Insbesondere ist das Schwenkverhalten des Kugelschwenkmoduls durch die Drehfeder von äußeren Einflüssen, wie z.B. Temperatureinflüssen, unabhängig und an gewünschte Anforderungen anpassbar.

Die Erfindung wird nachfolgend anhand bevorzugter Ausführungsformen unter Bezugnahme auf die Zeichnung beschrieben. In der Zeichnung zeigen:
- Fig. 1: eine perspektivische Darstellung eines Kugelschwenkmoduls gemäß einer ersten Ausführungsform der Erfindung in einer Betriebsstellung,
- Fig. 2: eine perspektivische Darstellung des Kugelschwenkmoduls gemäß der ersten Ausführungsform in der Betriebsstellung bei abgenommenem Gehäuseboden,
- Fig. 3: eine perspektivische Darstellung einer Drehfeder des Kugelschwenkmoduls gemäß der ersten Ausführungsform,
- Fig. 4: eine perspektivische Darstellung des Kugelschwenkmoduls gemäß der ersten Ausführungsform in einer senkrechten Stellung,
- Fig. 5: eine perspektivische Ansicht des Kugelschwenkmoduls gemäß der ersten Ausführungsform in einer Ruhestellung,
- Fig. 6: eine schematische Darstellung eines Kraftfahrzeugs mit angebautem Kugelschwenkmodul und
- Fig. 7: eine teilweise perspektivische Darstellung eines Kugelschwenkmoduls gemäß einer zweiten Ausführungsform der Erfindung.

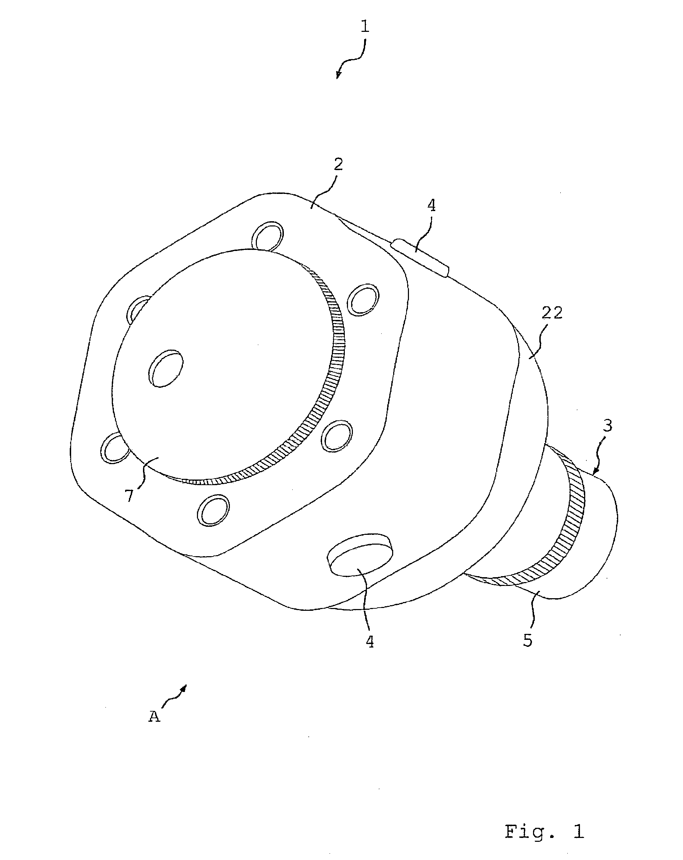

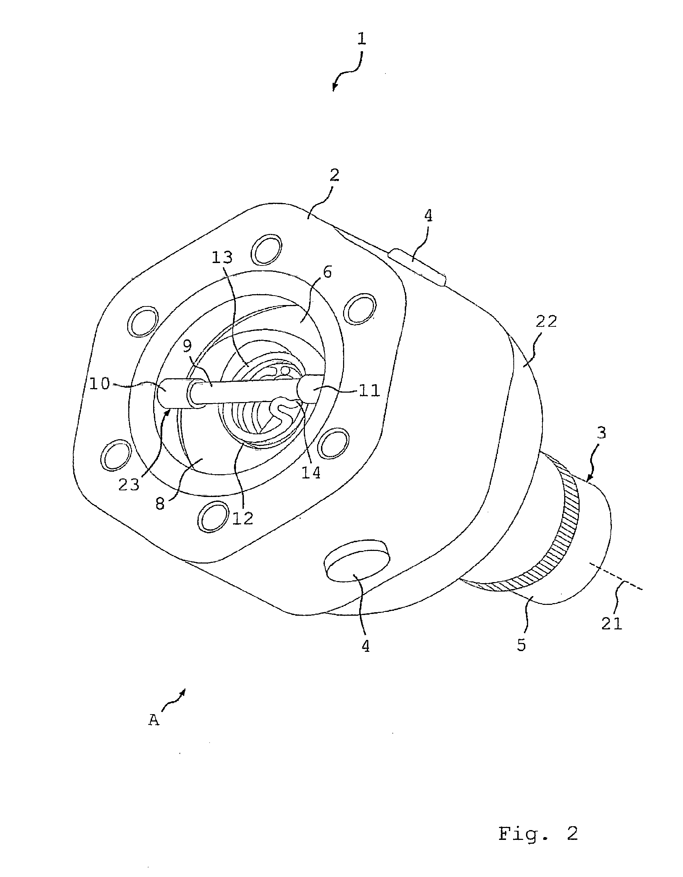

Aus Fig. 1 ist eine perspektivische Ansicht eines Kugelschwenkmoduls 1 gemäß einer ersten Ausführungsform der Erfindung in einer Betriebsstellung A ersichtlich. Das Kugelschwenkmodul umfasst ein Gehäuse 2, einen Kugelzapfen 3 und mehrere Verriegelungsvorrichtungen 4, mittels welchen der Kugelzapfen 3 in dem Gehäuse 2 fixierbar ist. Der Kugelzapfen 3 umfasst einen Zapfen 5 und eine Gelenkkugel 6 (siehe Fig. 2), mittels welcher der Kugelzapfen 3 drehbar und schwenkbar in dem Gehäuse 2 gelagert ist. Ferner erstreckt sich der Kugelzapfen 3 durch einen Dichtungsbalg 22 hindurch, der am Gehäuse 2 festgelegt ist. Das Gehäuse 2 weist einen Gehäuseboden (oder Gehäusedeckel) 7 auf, der zur besseren Erläuterung der Erfindung in den Fig. 2 bis 4 weggelassen ist.

Aus Fig. 2 ist das Kugelschwenkmodul 1 in der Betriebsstellung A ersichtlich, wobei die Gelenkkugel 6 an ihrem dem Zapfen 5 abgewandten Ende eine Führungsfläche 8 aufweist, die an Lagerhülsen 10 und 11 anliegt, die von einem an dem Gehäuse 2 befestigten Führungsbolzen 9 durchgriffen sind. Der Führungsbolzen 9 und die Lagerhülsen 10 und 11 bilden zusammen ein Führungselement 23. In dem Kugelzapfen 3 ist eine zur Führungsfläche 8 hin offene Ausnehmung 12 vorgesehen, in der eine Drehfeder 13 sitzt, die an ihren dem Führungselement 23 zugewandten Ende eine Aufnahme 14 aufweist, in welche der Führungsbolzen 9 eingreift. Die Feder 13 ist in der Betriebsstellung A um ihre Drehachse gespannt.

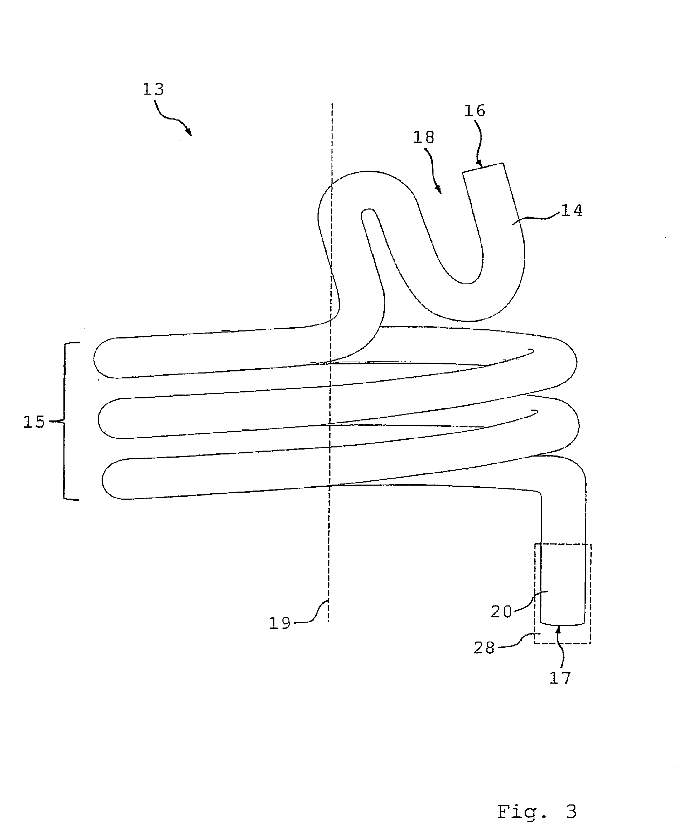

Aus Fig. 3 ist eine perspektivische Ansicht der Feder 13 ersichtlich, die eine Wicklung 15 umfasst, die zwischen zwei Endbereichen 16 und 17 der Feder 13 angeordnet ist. Die Feder 13 ist aus Draht hergestellt, der im Endbereich 16 zu der Aufnahme 14 gebogen ist. Die Aufnahme 14 umfasst einen U-förmigen Bereich 18, in welchen der Führungsbolzen 9 eingreift (siehe Fig. 2). Im Endbereich 17 ist der Draht der Feder 13 zu einem sich in Längsrichtung der Feder 13 erstreckenden Stift 20 geformt, der im montierten Zustand der Feder 13 in ein in dem Kugelzapfen 3 vorgesehenes Loch 28 eingreift, welches schematisch angedeutet ist. Der Stift 20 ist im radialen Abstand zur Längsmittenachse (Drehachse) 19 der Feder 13 angeordnet. Wird der Kugelzapfen 3 relativ zu dem Gehäuse 2 um seine Längsachse 21 (siehe Fig. 2) gedreht, so wird auch der Endbereich 16 relativ zu dem Endbereich 17 verdreht, insbesondere um die Drehachse 19. Die Feder kann hinsichtlich der Ausgestaltung ihrer Wicklung und/oder ihrer Endbereiche aber auch von der in Fig. 3 gezeigten Darstellung abweichen.

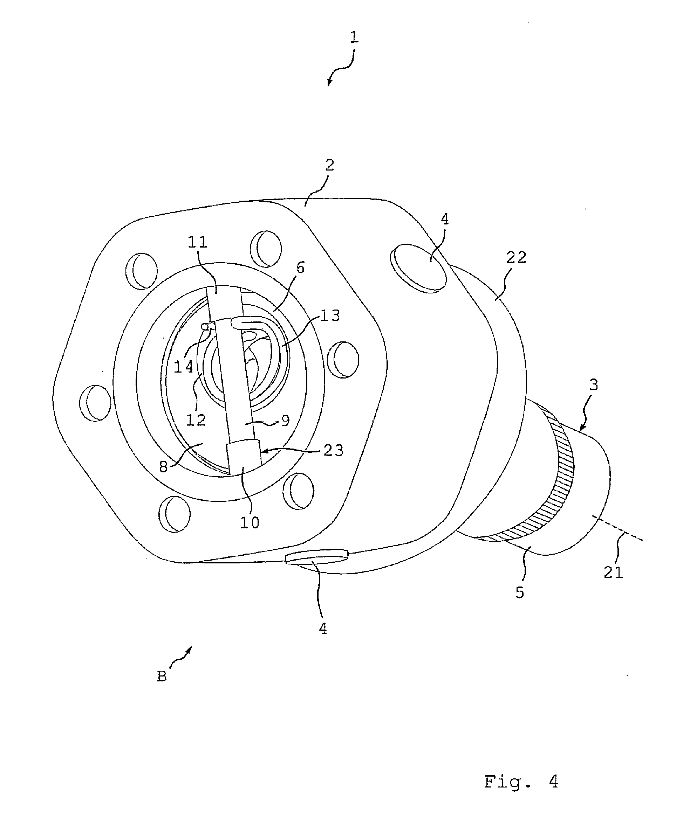

Aus Fig. 4 ist eine perspektivische Ansicht des Kugelschwenkmoduls 1 in einer senkrechten Stellung (Zwischenstellung) B ersichtlich, in welcher das Gehäuse 2 im Vergleich zur Betriebsstellung A um 90° relativ zu dem Kugelzapfen 3 verdreht ist. Da der Stift 20 in das Loch 28 eingreift und der Führungsbolzen 9 in der Aufnahme 14 sitzt, ist auch der Endbereich 16 gegenüber dem Endbereich 17 der Feder 13 um 90° verdreht. In dieser Stellung ist die Feder nicht um ihre Drehachse 19 gespannt (spannungsfreier Zustand der Drehfeder), so dass eine Drehbewegung aus der Betriebsstellung A in die senkrechte Stellung B durch die Feder 13 unterstützt wird.

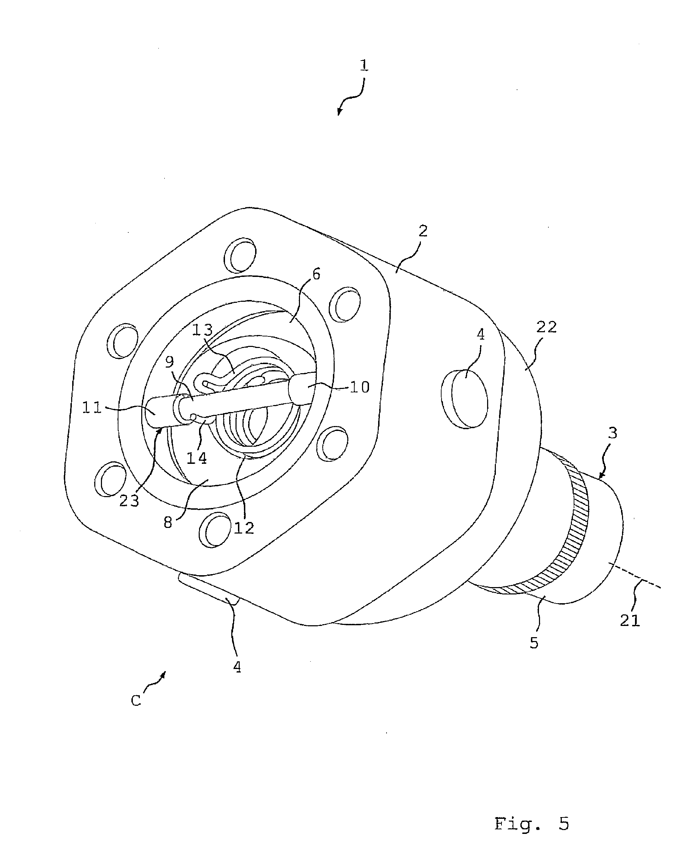

Aus Fig. 5 ist eine perspektivische Ansicht des Kugelschwenkmoduls 1 in einer Ruhestellung C ersichtlich, in welcher das Gehäuse 2 relativ zu dem Kugelzapfen 3 im Vergleich zur Betriebsstellung A um 180° verdreht ist. Da die Feder 13 ihren spannungsfreien Zustand in der Zwischenstellung B annimmt, ist sie in der Ruhestellung C wieder um ihre Drehachse gespannt, im Vergleich zur Betriebsstellung A aber in die entgegengesetzte Richtung. Das Überführen aus der Zwischenstellung B in die Ruhestellung C erfolgt somit gegen die Kraft der Feder 13. Dies hat zur Folge, dass bei einem Zurückdrehen des Kugelzapfens 3 aus der Ruhestellung C in die Zwischenstellung B die Drehbewegung des Kugelzapfens 3 durch die Feder 13 unterstützt wird.

Mittels der Verriegelungsvorrichtungen 4 kann der Kugelzapfen 3 in der Betriebsstellung A verriegelt werden. Zum Verriegeln des Kugelzapfens 3 in der Ruhestellung C können dieselben, andere oder teilweise andere Verriegelungsvorrichtungen vorgesehen sein. Vor einer Drehbewegung des Kugelzapfens 3 relativ zu dem Gehäuse 2 werden die Verriegelungen 4 gelöst.

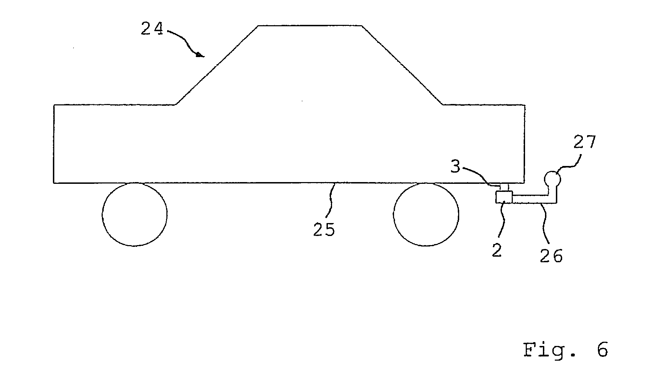

Aus Fig. 6 ist eine schematische Darstellung eines Kraftfahrzeugs 24 ersichtlich, an dessen Fahrzeugaufbau 25 der Kugelzapfen 3 des Kugelschwenkmoduls 1 gemäß der ersten Ausführungsform befestigt ist. Mit dem Gehäuse 2 des Kugelschwenkmoduls 1 ist eine Kugelstange 26 fest verbunden, die an ihrem freien Ende eine Kupplungskugel 27 aufweist. Gemäß Fig. 6 befindet sich das Kugelschwenkmodul 1 in der Betriebsstellung A.

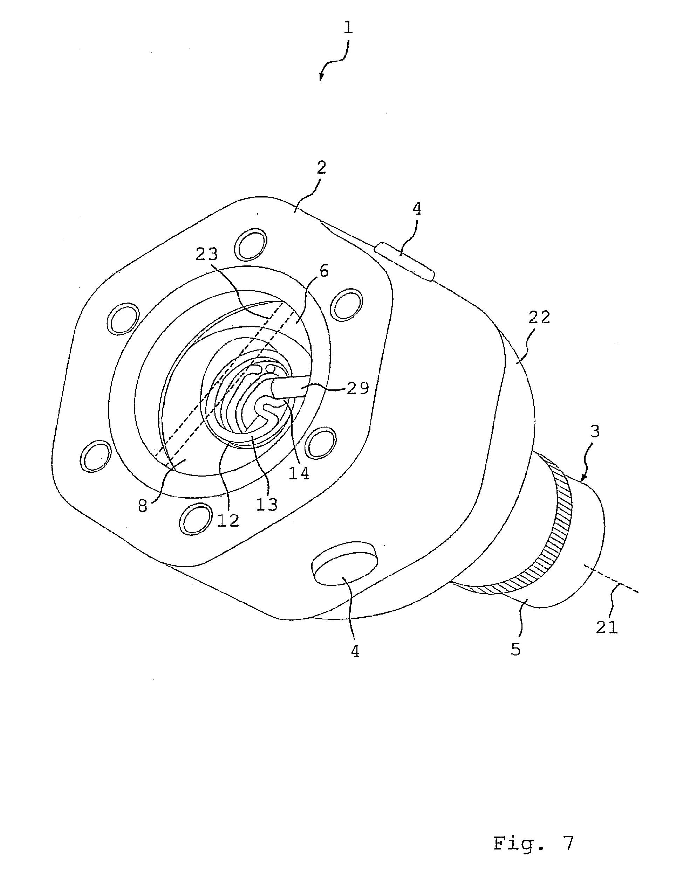

Aus Fig. 7 ist eine perspektivische Ansicht eines Kugelschwenkmoduls 1 gemäß einer zweiten Ausführungsform der Erfindung ersichtlich, wobei zu der ersten Ausführungsform identische oder ähnliche Merkmale mit denselben Bezugszeichen wie bei der ersten Ausführungsform bezeichnet sind. Im Gegensatz zur ersten Ausführungsform greift in die Aufnahme 14 der Drehfeder 13 ein Zapfen 29 des Gehäuses 2 ein. Die Drehfeder 13 ist somit ohne Zwischenschaltung des Führungselements 23 an dem Gehäuse 2 gelagert, welches in Fig. 7 lediglich schematisch angedeutet ist.

### Bezugszeichenliste

- 1: Kugelschwenkmodul
- 2: Gehäuse
- 3: Kugelzapfen
- 4: Verriegelung
- 5: Zapfen des Kugelzapfens
- 6: Gelenkkugel des Kugelzapfens
- 7: Gehäuseboden
- 8: Führungsfläche des Kugelzapfens
- 9: Führungsbolzen
- 10: Lagerhülse
- 11: Lagerhülse
- 12: Ausnehmung im Kugelzapfen
- 13: Drehfeder
- 14: Aufnahme der Feder
- 15: Wicklung der Feder
- 16: Endbereich der Feder
- 17: Endbereich der Feder
- 18: U-förmiger Bereich der Aufnahme
- 19: Längsmittenachse der Feder
- 20: Stift
- 21: Längsachse des Kugelzapfens
- 22: Dichtungsbalg
- 23: Führungselement
- 24: Kraftfahrzeug
- 25: Fahrzeugaufbau
- 26: Kugelstange
- 27: Kupplungskugel
- 28: Loch in Kugelzapfen
- 29: Gehäusezapfen
- A: Endstellung
- B: Zwischenstellung
- C: Endstellung

## Patentansprüche

1. Kugelschwenkmodul mit
einem Gehäuse (2),
einem eine Gelenkkugel (6) umfassenden Kugelzapfen (3), der mit seiner Gelenkkugel (6) bewegbar in dem Gehäuse (2) gelagert ist und sich aus diesem heraus erstreckt,
einem in dem Gehäuse (2) gelagerten Führungselement (23), an dem der Kugelzapfen (3) mit einer an der Gelenkkugel (6) vorgesehenen Führungsfläche (8) anliegt, sodass der Kugelzapfen (3) zwischen zwei Endstellungen (A, C) entlang einer vorgegebenen Bewegungsbahn relativ zu dem Gehäuse (2) bewegbar ist,
**gekennzeichnet durch**
eine in dem Gehäuse (2) angeordnete und zwischen den Kugelzapfen (3) und das Gehäuse (2) geschaltete Drehfeder (13), gegen deren Federkraft der Kugelzapfen (3) relativ zu dem Gehäuse (2) in wenigstens eine der Endstellungen (A, C) bewegbar ist, sodass die Feder (13) in der wenigstens einen Endstellung derart gespannt ist, dass ein Herausschwenken des Kugelzapfens (3) aus dieser Endstellung **durch** die Feder (13) unterstützt wird.

2. Kugelschwenkmodul nach Anspruch 1,
**dadurch gekennzeichnet, dass**
der Kugelzapfen (3) gegen die Kraft der Feder (13) relativ zu dem Gehäuse (2) in beide Endstellungen (A, C) bewegbar ist.

3. Kugelschwenkmodul nach Anspruch 1 oder 2,
**dadurch gekennzeichnet, dass**
die Drehfeder (13) an dem Gehäuse (2) und an dem Kugelzapfen (3) derart gelagert ist, dass der Kugelzapfen (3) ausgehend von einer auf der Bewegungsbahn liegenden Zwischenstellung (B) gegen die Kraft der Feder (13) relativ zu dem Gehäuse (2) in die wenigstens eine Endstellung bewegbar (A, C) ist.

4. Kugelschwenkmodul nach Anspruch 3,
**dadurch gekennzeichnet, dass**
die Zwischenstellung (B) zwischen den beiden Endstellungen (A, C) liegt, sodass der Kugelzapfen (3) ausgehend von der zwischenstellung (B) gegen die Kraft der Feder (13) relativ zu dem Gehäuse (2) in beide Endstellungen (A, C) bewegbar ist.

5. Kugelschwenkmodul nach Anspruch 3 oder 4,
**dadurch gekennzeichnet, dass**
die Feder (13) in der Zwischenstellung (B) nicht um ihre Drehachse (19) gespannt ist.

6. Kugelschwenkmodul nach einem der vorangehenden Ansprüche,
**dadurch gekennzeichnet, dass**
die Feder (13) als gewickelte Feder ausgebildet ist.

7. Kugelschwenkmodul nach einem der vorangehenden Ansprüche,
**dadurch gekennzeichnet, dass**
die Feder (13) unter Zwischenschaltung des Führungselements (23) an dem Gehäuse (2) gelagert ist.

8. Kugelschwenkmodul nach Anspruch 7,
**dadurch gekennzeichnet, dass**
die Feder (13) mit ihrem einen Ende (17) in den Kugelzapfen (3) eingreift und an ihrem anderen Ende (16) eine Aufnahme (14) aufweist, in welche das Führungselement (23) eingreift.

9. Kugelschwenkmodul nach einem der vorangehenden Ansprüche,
**dadurch gekennzeichnet, dass**
der Kugelzapfen (3) eine zur Führungsfläche (8) hin offene Ausnehmung (12) aufweist, in welcher die Feder (13) sitzt.

10. Kugelschwenkmodul nach einem der vorangehenden Ansprüche,
**dadurch gekennzeichnet, dass**
der Kugelzapfen (3) durch eine Drehung um 180° relativ zu dem Gehäuse (2) von einer ersten der Endstellungen (A) in eine zweite der Endstellungen (C) überführbar ist.

11. Kugelschwenkmodul nach einem der vorangehenden Ansprüche,
**dadurch gekennzeichnet, dass**
ausgehend von einem Zustand der Feder (13), in dem diese nicht um ihre Drehachse gespannt ist, der Kugelzapfen (3) durch eine Drehung um einen ersten Winkel relativ zu dem Gehäuse (2) mit einem ersten Drehsinn gegen die Kraft der Feder (13) in eine erste der Endstellungen (A) und durch eine Drehung um einen zweiten Winkel relativ zu dem Gehäuse (2) mit einem dem ersten Drehsinn entgegengesetzten zweiten Drehsinn gegen die Kraft der Feder (13) in eine zweite der Endstellungen (C) bewegbar ist.

12. Kugelschwenkmodul nach Anspruch 11,
**dadurch gekennzeichnet, dass**
der erste Winkel gleich dem zweiten Winkel gleich 90° ist.

13. Kugelschwenkmodul nach einem der vorangehenden Ansprüche,
**dadurch gekennzeichnet, dass**
der Kugelzapfen (3) in den Endstellungen (A, C) an dem Gehäuse (2) mittels einer oder mehrerer Verriegelungsvorrichtungen verriegelbar ist.

## Claims

1. Ball pivoting module having
a housing (2),
a ball pivot (3) which comprises a joint ball (6), is mounted movably by way of its joint ball (6) in the housing (2) and extends out of the said housing (2),
a guide element (23) which is mounted in the housing (2) and against which the ball pivot (3) bears by way of a guide face (8) which is provided on the joint ball (6), with the result that the ball pivot (3) can be moved relative to the housing (2) along a predefined movement path between two end positions (A, C), **characterized by**
a torsion spring (13) which is arranged in the housing (2) and is connected between the ball pivot (3) and the housing (2), counter to the spring force of which torsion spring (13) the ball pivot (3) can be moved relative to the housing (2) into at least one of the end positions (A, C), with the result that the spring (13) is stressed in the at least one end position in such a way that pivoting of the ball pivot (3) out of this end position is assisted by the spring (13).

2. Ball pivoting module according to Claim 1, **characterized in that** the ball pivot (3) can be moved relative to the housing (2) into both end positions (A, C) counter to the force of the spring (13).

3. Ball pivoting module according to Claim 1 or 2, **characterized in that** the torsion spring (13) is mounted on the housing (2) and on the ball pivot (3) in such a way that, starting from an intermediate position (B) which lies on the movement path, the ball pivot (3) can be moved relative to the housing (2) into the at least one end position (A, C) counter to the force of the spring (13).

4. Ball pivoting module according to Claim 3, **characterized in that** the intermediate position (B) lies between the two end positions (A, C), with the result that, starting from the intermediate position (B), the ball pivot (3) can be moved relative to the housing (2) into both end positions (A, C) counter to the force of the spring (13).

5. Ball pivoting module according to Claim 3 or 4, **characterized in that** the spring (13) is not stressed about its rotational axis (19) in the intermediate position (B).

6. Ball pivoting module according to one of the preceding claims, **characterized in that** the spring (13) is configured as a coiled spring.

7. Ball pivoting module according to one of the preceding claims, **characterized in that** the spring (13) is mounted on the housing (2) with the guide element (23) connected in between.

8. Ball pivoting module according to Claim 7, **characterized in that** the spring (13) is pressed with its one end (17) into the ball pivot (3) and, at its other end (16), has a receptacle (14), into which the guide element (23) engages.

9. Ball pivoting module according to one of the preceding claims, **characterized in that** the ball pivot (3) has a recess (12) which is open towards the guide face (8) and in which the spring (13) is seated.

10. Ball pivoting module according to one of the preceding claims, **characterized in that** the ball pivot (3) can be transferred from a first of the end positions (A) into a second of the end positions (C) by way of a rotation by 180° relative to the housing (2).

11. Ball pivoting module according to one of the preceding claims, **characterized in that**, starting from a state of the spring (13), in which state the said spring (13) is not stressed about its rotational axis, the ball pivot (3) can be moved into a first of the end positions (A) by way of a rotation by a first angle relative to the housing (2) in a first rotational direction counter to the force of the spring (13), and can be moved into a second of the end positions (C) by way of a rotation by a second angle relative to the housing (2) in a second rotational direction, counter to the force of the spring (13), which is opposed to the first rotational direction.

12. Ball pivoting module according to Claim 11, **characterized in that** the first angle is equal to the second angle and is equal to 90°.

13. Ball pivoting module according to one of the preceding claims, **characterized in that**, in the end positions (A, C), the ball pivot (3) can be locked on the housing (2) by means of one or more locking apparatuses.

## Revendications

1. Module de pivot sphérique comprenant un boîtier (2),
un tourillon sphérique (3) comportant une rotule d'articulation (6), lequel est monté de manière déplaçable dans le boîtier (2) au moyen de sa rotule d'articulation (6) et s'étend hors de celui-ci,
un élément de guidage (23) monté dans le boîtier (2), contre lequel élément de guidage s'applique le tourillon sphérique (3) par une surface de guidage (8) prévue sur la rotule d'articulation (6), de telle sorte que le tourillon sphérique (3) soit déplaçable par rapport au boîtier (2) entre deux positions finales (A, C) le long d'une trajectoire de déplacement prédéfinie,
**caractérisé par**
un ressort de torsion (13) disposé dans le boîtier (2) et connecté entre le tourillon sphérique (3) et le boîtier (2), à l'encontre de la force de ressort duquel le tourillon sphérique (3) est déplaçable par rapport au boîtier (2) dans au moins l'une des positions finales (A, C), de telle sorte que le ressort (13) soit tendu dans l'au moins une position finale de telle sorte qu'un pivotement du tourillon sphérique (3) hors de cette position finale soit assisté par le ressort (13).

2. Module de pivot sphérique selon la revendication 1,
**caractérisé en ce que**
le tourillon sphérique (3) est déplaçable dans les deux positions finales (A, C) par rapport au boîtier (2) à l'encontre de la force du ressort (13).

3. Module de pivot sphérique selon l'une quelconque des revendications 1 et 2,
**caractérisé en ce que**
le ressort de torsion (13) est monté sur le boîtier (2) et sur le tourillon sphérique (3) de telle sorte que le tourillon sphérique (3) soit déplaçable dans l'au moins une position finale (A, C) par rapport au boîtier (2) à l'encontre de la force du ressort (13), à partir d'une position intermédiaire (B) située sur la trajectoire de déplacement.

4. Module de pivot sphérique selon la revendication 3,
**caractérisé en ce que**
la position intermédiaire (B) se situe entre les deux positions finales (A, C), de telle sorte que le tourillon sphérique (3) soit déplaçable dans les deux positions finales (A, C) par rapport au boîtier (2) à l'encontre de la force du ressort (13), à partir de la position intermédiaire (B).

5. Module de pivot sphérique selon la revendication 3 ou 4,
**caractérisé en ce que**,
dans la position intermédiaire (B), le ressort (13) n'est pas tendu autour de son axe de rotation (19).

6. Module de pivot sphérique selon l'une quelconque des revendications précédentes,
**caractérisé en ce que**
le ressort (13) est réalisé sous forme de ressort enroulé.

7. Module de pivot sphérique selon l'une quelconque des revendications précédentes,
**caractérisé en ce que**
le ressort (13) est monté sur le boîtier (2) par l'intermédiaire de l'élément de guidage (23).

8. Module de pivot sphérique selon la revendication 7,
**caractérisé en ce que**
le ressort (13) vient en prise par l'une de ses extrémités (17) dans le tourillon sphérique (3) et comprend, à son autre extrémité (16), un logement (14) dans lequel vient en prise l'élément de guidage (23).

9. Module de pivot sphérique selon l'une quelconque des revendications précédentes,
**caractérisé en ce que**
le tourillon sphérique (3) comprend un évidement (12) ouvert en direction de la surface de guidage (8), dans lequel évidement est logé le ressort (13).

10. Module de pivot sphérique selon l'une quelconque des revendications précédentes,
**caractérisé en ce que**
l'on peut faire passer le tourillon sphérique (3) d'une première position parmi les positions finales (A) à une deuxième position parmi les positions finales (C) par une rotation de 180° par rapport au boîtier (2).

11. Module de pivot sphérique selon l'une quelconque des revendications précédentes,
**caractérisé en ce**
**qu'**à partir d'un état du ressort (13) dans lequel celui-ci n'est pas tendu autour de son axe de rotation, le tourillon sphérique (3) est déplaçable, par une rotation sur un premier angle par rapport au boîtier (2) dans un premier sens de rotation, à l'encontre de la force du ressort (13), dans une première position parmi les positions finales (A) et, par une rotation sur un deuxième angle par rapport au boîtier (2) dans un deuxième sens de rotation opposé au premier sens de rotation, à l'encontre de la force du ressort (13), dans une deuxième position parmi les positions finales (C).

12. Module de pivot sphérique selon la revendication 11,
**caractérisé en ce que**
le premier angle et le deuxième angle valent 90°.

13. Module de pivot sphérique selon l'une quelconque des revendications précédentes,
**caractérisé en ce que**
le tourillon sphérique (3) peut être verrouillé dans les positions finales (A, C) sur le boîtier (2) au moyen d'un ou de plusieurs dispositifs de verrouillage.
